# EUROPÄISCHE PATENTSCHRIFT

(11) **EP 0 622 258 B1**
(45) Veröffentlichungstag und Bekanntmachung des Hinweises auf die Patenterteilung: **17.07.1996**
(21) Anmeldenummer: 94104372.1
(22) Anmeldetag: 19.03.1994
(51) Int. Cl.: B60J 1/18

(54) **Heckfensterscheibe für Cabriolet-Fahrzeuge**
Rear window for cabriolet type vehicle
Fenêtre arrière pour cabriolet

(30) Priorität: 29.04.1993 DE 9306462 U
(43) Veröffentlichungstag der Anmeldung: 02.11.1994
(73) Patentinhaber: Wilhelm Karmann GmbH, D-49084 Osnabrück (DE)
(72) Erfinder: Hemmis, Ludger, D-49086 Osnabrück (DE); Overberg, Matthias, D-49076 Osnabrück (DE); Schröder, Burkhard, D-48336 Sassenberg (DE)
(74) Vertreter: Busse & Busse Patentanwälte

(56) Entgegenhaltungen:
- EP-A- 0 284 931
- EP-A- 0 453 098
- DE-A- 3 835 292
- DE-U- 9 203 530

## Beschreibung

Die Erfindung bezieht sich auf eine Heckfensterscheibe aus Festglas gemäß dem Oberbegriff des Anspruchs 1.

Es sind Heckscheiben aus Festglas für Cabriolet-Fahrzeuge bekannt, die jedoch einen Winkelrahmen zur Aufnahme des Verdeckstoffs und der Gummidichtung für die Glasscheibe benötigen. Beim Zusammenklappen des Verdecks in eine Ablagestellung ist jedoch aufgrund der Sperrigkeit des Winkelrahmens nur ein räumlich eingeschränktes Ablegen des Verdeckpakets möglich, so daß dieses verhältnismäßig hoch steht. Um ein tieferes Ablegen des Verdeckpakets zu ermöglichen, ist es daher bekannt, Heckscheiben aus einem flexiblen oder transparenten Kunststoff in Cabriolet-Verdecken einzusetzen.
Diese haben den Vorteil, keine zusätzlichen Verstärkungsmaßnahmen wie Winkelrahmen oder dgl. zu benötigen, da sie die Zugkräfte des Verdeckstoffs, die im gespannten Zustand des Verdecks auftreten, aufnehmen können. Nachteilig ist jedoch ihre nur geringe Standfestigkeit, so daß sie häufig vorzeitig ausgetauscht werden müssen.

Aufgabe der Erfindung ist es dementsprechend, eine Heckfensterscheibe aus Festglas zu schaffen, die keine zusätzlichen Verstärkungsrahmen benötigt und somit die Vorteile einer Kunststoffscheibe mit der Ianglebigkeit und Stabilität des Materials Glas verbindet. Dabei muß die Festglasscheibe so ausgebildet sein, daß eine einwandfreie Abdichtung gegen die Verdeckbespannung gegeben ist.

Zur Lösung dieser Aufgabe zeichnet sich die erfindungsgemäße Heckfensterscheibe durch die im Anspruch 1 angegebenen Merkmale aus. In den Ansprüchen 2 bis 6 sind vorteilhafte Ausgestaltungen der Erfindung angegeben.

Durch die erfindungsgemäße Kombination einer Festglasscheibe mit einem Kunststoffverbindungsmittel, das mit der Verdeckbespannung durch eine Hochfrequenzschweißung verbunden werden kann, ist der Einsatz von Glasscheiben in Heckfenster von Cabriolet-Fahrzeugen möglich, ohne daß zusätzliche Verstärkungsrahmen eingesetzt werden müßten. Die Verwendung von Glasscheiben ist deswegen anzustreben, da sich diese durch eine lange Lebensdauer und eine hohe Stabilität auszeichnen. Über das Verbindungselement können die im gespannten Zustand des Verdecks auftretenden Zugkräfte aufgenommen und in die Glasscheibe eingeleitet werden. Da keine sperrigen Verstärkungsrahmen benötigt werden, kann das Verdeck des Cabriolets weit nach hinten zurückgeklappt werden. Außerdem ergibt sich durch das Fehlen von Verstärkungsrahmen ein Gewichtsvorteil, so daß sich die Heckscheibe beim Zurückklappen des Verdecks weniger tief nach unten durchdrückt.

Aus der erfindungsgemäßen Ausgestaltung der Heckscheibe ergeben sich noch weitere Vorteile. Durch die vorteilhafte Ausbildung des Verbindungselements als Profilstrang wird auch eine gleichzeitige Abdichtung der Verbindung zwischen Fensterscheibe und Verdeckbespannung ermöglicht, so daß kein Regenwasser in das Fahrzeug eintreten kann.

Zweckmäßig werden PVC oder TPE als Material für den Profilstrang eingesetzt, da sich diese Materialien durch eine hohe Zugfestigkeit und geeignete Eigenschaften im Spannungsverhalten auszeichnen, so daß die auftretenden Zugkräfte beim Schließen des Verdecks gut über das Profil aufgenommen werden können.

In einer bevorzugten Ausführungsform wird ein Haftvermittler (z.B. Iack) auf den Außenrandbereichen der Heckscheibe aufgetragen, so daß das Aufbringen von extrudiertem PVC oder TPE in einem Injektionsverfahren direkt anschließend erfolgen kann. In einer anderen vorteilhaften Ausführungsform wird Klebstoff auf die Außenbereiche der Heckscheibe aufgetragen und auf den Klebstoff wird das mit dem Verdeckstoff zuvor HF-geschweißte Profil gesetzt. Sowohl der Haftvermittler als auch der Klebstoff erlauben eine zuverlässige Verbindung zwischen Glasscheibe und Profil und gewährleisten einen Schutz vor dem Eindringen von Feuchtigkeit.

Eine bevorzugte Ausführungsform der Heckscheibe sieht vor, daß an ihrer Innenseite Aufnahmeelemente zum Anbringen von Zugverbindungsmitteln (Spanngurte) sowie Aufnahmeelemente für die Heckscheibenführung angeklebt sind. Somit stellt die Fensterscheibe eine Montageeinheit dar. Hierdurch kann der Fertigungsablauf eines Cabriolet-Verdecks vereinfacht werden.

Zwei Ausführungsbeispiele des Gegenstands der Erfindung werden nachstehend anhand einer schematischen Zeichnung näher erläutert. In der Zeichnung zeigen
- Fig. 1: eine vereinfachte Rückansicht eines Fahrzeuges mit einem Cabriolet-Verdeck;
- Fig. 2: einen Schnitt nach Linie A - A in Fig. 1 bei einer ersten Ausführungsform;
- Fig. 3: einen Schnitt nach Linie A - A in Fig. 1 bei einer zweiten Ausführungsform.
- Fig. 4: eine Abwandlung zu Fig. 2

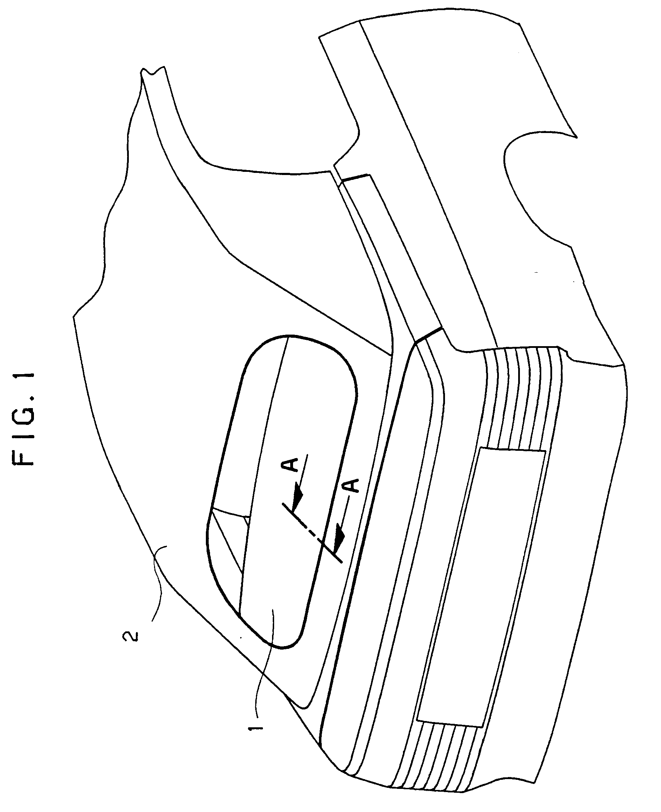

Die Fig. 1 zeigt eine Heckscheibe 1 im Verdeck 2 eines Cabriolet-Fahrzeuges.

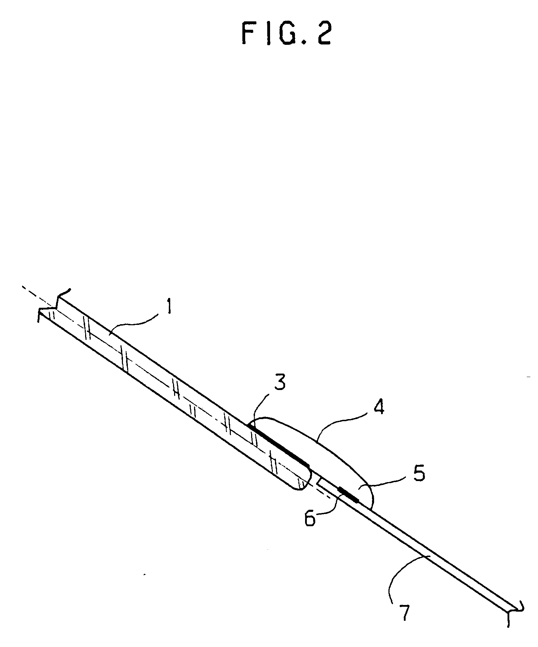

In Fig. 2 ist ein erstes Ausführungsbeispiel der Erfindung, dargestellt. Auf den Randbereich der aus Glas bestehenden Heckscheibe 1 ist ein Haftvermittler 3, z.B. Lack, aufgetragen, über den die Heckscheibe 1 mit einem Profilstrang 4 verbunden ist. Das Profil 4 besteht aus extrudiertem PVC (Polyvinylchlorid) oder TPE (Thermoplastische Elastomere mit einem erhöhten Gummianteil) und wird in einem Injektionsverfahren auf den Haftvermittler 3 aufgespritzt. In dieser Ausführungsform ragt das Profil 4 ein Stück über den Rand der Heckscheibe 1 hinaus. Dieser Profilbereich 5 wird in einer Hochfrequenzschweißung 6 mit dem Verdeckstoff 7 des Cabriolet-Fahrzeugs verbunden. Die HF-Schweißung 6 wird dabei umlaufend um den Rand der Fensterscheibe 1 durchgeführt, so daß das Fahrzeug gegen eindringende Feuchtigkeit geschützt ist. Auf der anderen Seite des Profilstrangs 4 wirkt der Haftvermittler 3 als Dichtung gegen Feuchtigkeit. Durch die Schweißnaht 6 ist das Profil 4 und somit die Fensterscheibe 1 fest mit dem Verdeckstoff 7 zu einer Einheit verbracht worden. Zusätzliche Dichtungen entfallen.

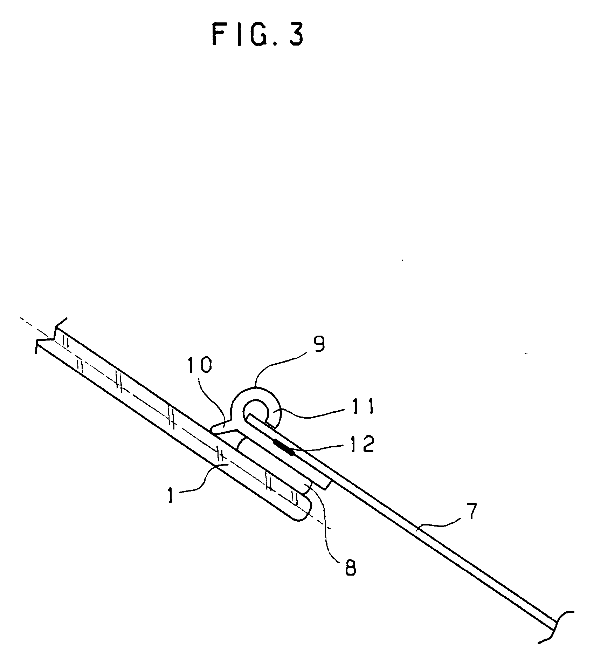

In Fig. 3 ist ein zweites Ausführungsbeispiel abgebildet. Auf den Außenrand der Heckscheibe 1 ist hier ein Klebstoff 8 aufgetragen worden. Auf dem Klebstoffauftrag 8 befindet sich ein Profilstrang 9, der strukturierter als im Ausführungsbeispiel nach Fig. 2 ausgeführt ist und der zuvor mit dem Verdeckstoff 7 HF-verschweißt wurde. Er enthält eine kleine Nase 10, die direkt an der Glasscheibe 1 anliegt und eine Rundung 11 in die der Verdeckstoff 7 eingeschoben ist. Beide Ausformungen stellen zusätzliche Maßnahmen zur Unterstützung der Dichtigkeit gegen Feuchtigkeit an der Glasscheibe 1 und dem Verdeckstoff 7 dar.
Das Profil 9 ist - wie gesagt - zuvor durch eine HF-Schweißnaht 12 mit dem Verdeckstoff 7 verbunden worden. Das Profil 9 ragt in diesem Fall nicht über die Glasscheibe 1 hinaus und HF-Schweißnaht 12 und Klebstoffauftrag 8 liegen übereinander, während sie in Fig. 2 nebeneinander angeordnet sind. Auch in diesem Ausführungsbeispiel sind Glasscheibe 1 und Verdeckstoff 7 fest miteinander verbunden und können nur durch Zerstörung voneinander gelöst werden.

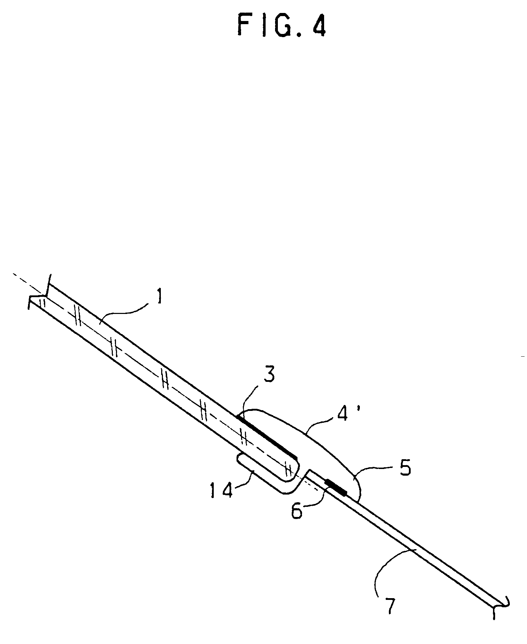

Der Gegenstand der Erfindung ist selbstverständlich nicht auf die beiden vorstehend beschriebenen Ausführungsbeispiele beschränkt; vielmehr sind im Rahmen der Ansprüche auch andere Ausgestaltungen möglich. So kann z.B., wie in Fig. 4 dargestellt, ein Profilstrang 4' mit einer den Rand der Festglasscheibe 1 um- bzw. unterfassenden Lippe 14 versehen sein, um eine verbesserte Aufnahme der Scheibe zu ermöglichen.

## Patentansprüche

1. Heckfensterscheibe aus Festglas für Cabriolet-Fahrzeuge, die in eine Verdeckbespannung einfügbar ist, **dadurch gekennzeichnet**, daß die Festglasscheibe (1) mit einem auf dem Randbereich aufgebrachten Kunststoff-Verbindungselement versehen ist, das mit der Verdeckbespannung (7) mittels Hochfrequenz-Schweißung fest verbindbar ist.

2. Heckscheibe nach Anspruch 1**, dadurch gekennzeichnet**, daß das Kunststoff-Verbindungselement als Profilstrang (4,9) ausgebildet ist.

3. Heckscheibe nach Anspruch 1 oder 2, **dadurch gekennzeichnet**, daß der Profilstrang (4,9) aus extrudiertem PVC (Polyvinylchlorid) oder TPE (thermoplastisches Elastomere mit einem erhöhten Gummianteil) besteht.

4. Heckscheibe nach einem der Ansprüche 1 bis 3, **dadurch gekennzeichnet**, daß auf dem Randbereich der Festglasscheibe (1) ein Haftvermittler (3) (z.B. Lack) aufgetragen ist und daß der Profilstrang (4) auf den Haftvermittler (3) aufgebracht ist.

5. Heckscheibe nach Anspruch 4, **dadurch gekennzeichnet**, daß der Profilstrang (4') mit einer die Festglasscheibe (1) um- bzw. unterfassenden Lippe (14) versehen ist.

6. Heckscheibe nach einem der Ansprüche 1 bis 3, **dadurch gekennzeichnet**, daß der mit dem Verdeckstoff HF-geschweißte Profilstrang (9) mittels eines auf den Randbereich der Fensterscheibe (1) aufgetragenen Klebstoffs (8) mit der Fensterscheibe verbunden ist.

7. Heckscheibe nach einem der Ansprüche 1 bis 6, **dadurch gekennzeichnet**, daß auf die Innenseite der Heckscheibe (1) Aufnahmeelemente zum Anbringen von Zugverbindungsmitteln (Spanngurte) sowie Aufnahmeelemente für die Heckscheibenführung mit einem Ein- oder Zwei-Komponentenkleber angeklebt sind.

## Claims

1. A rear windscreen of rigid glass for cabriolet vehicles, adapted to be incorporated into the soft top of a vehicle, characterised in that the rigid glass pane (1) is provided with a synthetic plastics connecting element applied to the marginal portion and which can be rigidly connected to the soft top fabric (7) by high frequency welding.

2. A rear windscreen according to claim 1, characterised in that the synthetic plastics connecting element is constructed as a profiled rod (4, 9).

3. A rear windscreen according to claim 1 or 2, characterised in that the profiled rod (4, 9) consists of extruded PVC (polyvinylchloride) or TPE (thermoplastic elastomers with an increased rubber content).

4. A rear windscreen according to one of claims 1 to 3, characterised in that a coupling agent (3) (e.g. Iack) is applied to the rim area of the rigid glass pane (1) and in that the profiled rod (4) is applied to the coupling agent (3).

5. A rear windscreen according to claim 4, characterised in that the profiled rod (4') has a lip (14) which engages around or underneath the rigid glass pane (1).

6. A rear windscreen according to one of claims 1 to 3, characterised in that the profiled rod (9) which is welded to the soft top fabric by high frequency welding is connected to the window by means of an adhesive (8) which is applied to the rim area of the windscreen (1).

7. A rear windscreen according to one of claims 1 to 6, characterised in that receiving elements for the connection of tractive connecting means (tensioning straps) and receiving elements for the rear windscreen guide are glued onto the inside of the rear windscreen (1) by means of a single or bi-component glue.

## Revendications

1. Vitre de fenêtre arrière en verre rigide pour cabriolets, intégrable dans une capote,
caractérisée en ce que
- la vitre rigide en verre (1) peut être munie d'un élément de liaison en matière plastique disposé le long de son bord et qui peut être rendu solidaire de la capote (7) par soudure à haute fréquence.

2. Vitre de fenêtre arrière selon la revendication 1,
caractérisée en ce que
- l'élément de liaison en matière plastique est constitué par une barrette profilée (4, 9).

3. Vitre de fenêtre arrière selon la revendication 1 ou 2,
caractérisée en ce que
- la barrette profilée (4, 9) est une baguette extrudée en PVC (polychlorure de vinyle) ou en TPE (élastomère thermoplastique à forte teneur en caoutchouc).

4. Vitre de fenêtre arrière selon une des revendications 1 à 3,
caractérisée en ce qu'
- un primaire d'adhérence (3) (par exemple un vernis) est déposé le long du bord de la vitre rigide (1) et que la barrette profilée (4) est fixée sur le primaire d'adhérence (3).

5. Vitre de fenêtre arrière selon la revendication 4,
caractérisée en ce que
- la barrette profilée (4') comporte une lèvre (14) entourant latéralement et par-dessous la vitre rigide (1).

6. Vitre de fenêtre arrière selon une des revendications 1 à 3,
caractérisée en ce que
- la barrette profilée (9), soudée par haute fréquence au matériau de la capote est reliée à la vitre (1) par l'intermédiaire d'un adhésif (8) déposé le long du bord de cette vitre.

7. Vitre de fenêtre arrière selon une des revendications 1 à 6,
caractérisée en ce que
- des éléments pouvant recevoir des moyens de liaison par traction (sangles de tension) et des éléments pouvant recevoir le guidage de la vitre, sont fixés par un adhésif à un ou deux composants, sur la face interne de la vitre (1).
